**Europäisches Patentamt**

**European Patent Office**

**Office européen des brevets**

(19)

(11) Veröffentlichungsnummer: **0 138 268**
**B1**

(12) **EUROPÄISCHE PATENTSCHRIFT**

(45) Veröffentlichungstag der Patentschrift: **26.09.90**

(51) Int. Cl.⁵: **G 11 B 15/10**

(21) Anmeldenummer: **84201429.2**

(22) Anmeldetag: **05.10.84**

(54) **Kommandomechanismus für das Laufwerk eines Magnetbandkassettengerätes.**

(30) Priorität: **14.10.83 DE 3337359**

(43) Veröffentlichungstag der Anmeldung:
**24.04.85 Patentblatt 85/17**

(45) Bekanntmachung des Hinweises auf die
Patenterteilung:
**26.09.90 Patentblatt 90/39**

(84) Benannte Vertragsstaaten:
**DE FR GB IT NL**

(56) Entgegenhaltungen:
**EP-A-0 095 815**
**EP-A-0 167 203**
**DE-A-1 946 150**
**DE-A-3 042 746**
**DE-A-3 226 718**
**US-A-3 676 810**

**PATENT ABSTRACTS OF JAPAN, vol. 6, no. 171**
**(P-140)1049r, 4 septembre 1982; & JP-A-57 88**
**548 (SANYO DENKI K.K.) 02-06-1982**

(73) Patentinhaber: **Philips Patentverwaltung GmbH**
**Wendenstrasse 35 Postfach 10 51 49**
**D-2000 Hamburg 1 (DE)**
(84) **DE**

(73) Patentinhaber: **N.V. Philips'**
**Gloeilampenfabrieken**
**Groenewoudseweg 1**
**NL-5621 BA Eindhoven (NL)**
(84) **FR**

(72) Erfinder: **Kommoss, Klaus**
**Am Rabenbaum 26**
**D-6330 Wetzlar-Naunheim (DE)**
Erfinder: **Dietz, Hans-Werner**
**Sattelstrasse 23**
**D-6332 Ehringshausen 5 (DE)**
Erfinder: **Klös, Karl**
**Odenhäuserstrasse 4**
**D-6304 Ruttershausen (DE)**
Erfinder: **Köppeler, Thomas Heinrich Wilhelm**
**Giessenerstrasse 10**
**D-3555 Fronhausen (DE)**

**EP 0 138 268 B1**

(74) Vertreter: **Kupfermann, Fritz-Joachim, Dipl.-Ing. et al**
**Philips Patentverwaltung GmbH Wendenstrasse**
**35 Postfach 10 51 49**
**D-2000 Hamburg 1 (DE)**

## Beschreibung

Die Erfindung bezieht sich auf einen Kommandomechanismus für das Laufwerk eines Magnetbandkassettengerätes mit zwei längsverschieblichen, nebeneinander angeordneten Bedienungsstangen zum Schalten zweier unterschiedlicher Betriebspositionen des Gerätes.

Aus der DE-Patentanmeldung P 30 42 746.4 ist ein Laufwerk mit zwei Bedienungsstangen für zwei Laufwerksfunktionen bekannt. Die zwei Bedienungsstangen können das Laufwerk beispielsweise in Funktionen für schnellen Vorlauf und schnellen Rücklauf schalten. Die Bedienung der Bedienungsstangen erfolgt von Hand. Dies ist zunehmend unerwünscht, da relativ große Kräfte erforderlich sind und für die Bedienungsstangen im Gerät ein relativ großer Platz für das Laufwerk benötigt wird.

Es ist Aufgabe der Erfindung, ein derartiges Laufwerk mit Bedienungsstangen für einen elektrisch betriebenen Servoantrieb geeignet zu machen.

Die gestellte Aufgabe ist erfindungsgemäß dadurch gelöst, daß

an einer mittels eines Servomotors in Längsrichtung hin und her verschieblichen Servostange ein Kommandoglied angreift,

an dem Kommandoglied ein Kommandostift angeordnet ist, der in einen mittels mindestens einer Richtungssperre nur in einer Richtung durchfahrbar gemachten, in sich rundgeschlossenen Leitweg eingreift,

von dem Leitweg eine erste und eine zweite Kommandobahn abgehen, in die der Kommandostift vom Leitweg her einlaufen kann,

in die Kommandobahnen Mitnehmer der Bedienungsstangen eingreifen,

der Kommandostift beim Einlaufen in die erste oder zweite Kommandobahn den jeweiligen Mitnehmer der zugeordneten Bedienungsstange die Stange verschiebend mitnimmt,

der Kommandostift (257) eine derartige Ausgangsposition (270) einnimmt, daß durch Hin- und Herverschiebung der Servostange (62) die zweite Kommandobahn (255) über die Richtungssperre (253b) im genannten Richtungssinn erreichbar ist, während die erste Kommandobahn (254) direkt in entgegengesetzter Richtung erreichbar ist.

Der Vorteil eines solchen servoangetriebenen Laufwerkes besteht darin, daß von einem standardisierten, in Massen gefertigten handbetriebenen Laufwerk ausgegangen werden kann. Der Vorteil dieses servobetriebenen Laufwerkes besteht darüber hinaus darin, daß mit einem kurzen Hub der Servostange gearbeitet werden kann und damit ein rascheres Schalten aufgrund des kürzeren Hubes der Servostange möglich ist. Damit läßt sich die Bedienung beispielsweise eines Autoradios nicht nur erleichtern, sondern auch durch kürzere Bedienungszeiten verbessern. Der kurze Hub liefert weiter einen geringen Platzbedarf für die Verschiebung der Servostange beim Verschieben der Bedienungsstangen.

Nach einer weiteren Ausgestaltung der Erfindung ist vorgesehen, daß das Kommandoglied eine Verbindungsstange ist, an der der Kommandostift am von der Servostange abliegenden Ende gegenüber der Servostange beweglich angreift. Dadurch wird auf einfache Weise möglich, daß der Kommandostift die einzelnen, für ihn vorgesehen Kommandobahnen durchlaufen kann. Außerdem ermöglicht die Beweglichkeit einen gewissen Toleranzausgleich innerhalb des Laufwerkes.

Nach einer weiteren Ausgestaltung der Erfindung ist vorgesehen, daß die Kommandobahnen und der Leitweg in einem gerätefesten Kommandoblock vorgesehen sind. Der Kommandoblock läßt sich damit auf einfache Weise entweder getrennt oder zusammen mit dem Gerätechassis im sogenannten "outsert moulding" herstellen.

Nach einer weiteren Ausgestaltung der Erfindung ist vorgesehen, daß mit der Servostange ein Umkehrschalter zusammenwirkt, der gegenüber ihrem Längsverschiebungsweg derartig positioniert ist, daß die Drehrichtung des Motors durch Schalterbetätigung erst dann umgekehrt wird, wenn der Kommandostift in dem Leitweg eine Stelle erreicht hat, aus der er den Leitweg in dem immer gleichbleibenden, vorgegebenen Richtungssinn durchlaufen muß, so daß der Kommandostift nicht in falsche Kommandobahnen einlaufen kann. Der Umkehrschalter kann selbstverständlich auch noch für andere Laufwerksfunktionen eingesetzt werden im Zusammenwirken mit der Servostange. So kann der Umkehrschalter beispielsweise auch den Spielbetrieb beeinflussen, indem er die Servostange an ihrer für den Spielbetrieb vorgesehenen Stellung anhält.

Nach einer weiteren Ausgestaltung der Erfindung ist vorgesehen, daß der Leitweg für den Kommandostift einen Startbereich hat, aus dem der Kommandostift unmittelbar in die erste Kommandobahn oder über den übrigen Teil des Leitweges in die zweite Kommandobahn einlaufen kann. Der Startbereich gibt die Möglichkeit, aus ihm heraus entsprechend der Steuerung durch den Mikroprozessor und die gewählten Tip-Tasten den Kommandostift immer in die richtige gewünschte Kommandobahn einzuführen. Im Startbereich kann die Servostange eine zweite Funktion des Laufwerkes geschaltet haben, die beim Fahren in den Kommandobahnen ausgelöscht wird.

Nach einer weiteren Ausgestaltung der Erfindung ist vorgesehen, daß

von dem Leitweg eine dritte Kommandobahn abzweigt, die in Verlängerung des Servostangenverschiebungsweges liegt,

beim Einlaufen des Kommandostiftes in die dritte Kommandobahn mittels einer elektrischen Steuerschaltung der Umkehrschalter außer Funktion gesetzt wird.

Damit kann die Steuerstange beispielsweise auch noch eine weitere Funktion übernehmen, ohne daß der Kommandostift diese Bewegung hemmt.

Die Erfindung wird anhand des in den Zeichnungen dargestellten Ausführungsbeispieles näher erläutert. Es zeigen:

Fig. 1 eine schaubildliche Darstellung eines Teiles des Laufwerks eines Magnetbandkassettengeräte worin ein Kommandomechanismus nach der Erfindung verwendet werden kann,

Fig. 2A eine schaubildliche vergrößerte Darstellung eines Rastmechanismus des Laufwerkes nach Fig. 1 in einer ersten Lage,

Fig. 2B den Rastmechanismus nach Fig. 2A in einer zweiten Lage,

Fig. 3 einige Teile des Laufwerkes nach Fig. 1, von der Tonkopfseite her gesehen, in einer ersten Bandlaufrichtung,

Fig. 4 einige Teile des Laufwerkes nach Fig. 1, von der Tonkopfseite her gesehen, in einer zu Fig. 3 entgegengesetzten Bandlaufrichtung,

Fig. 5 das Zusammenwirken einer Leitschlitzanordnung des Laufwerkes nach Fig. 1 mit Steuermitteln für die Umschaltung der Bandlaufrichtung und Kopfplatte in einer Explosionsdarstellung,

Fig. 6 die verschiedenen Lagen einer Steuerplatte zur Steuerung der Leitschlitzanordnung und der Kopfplatte gemäß Fig. 5,

Fig. 7 eine schaubildliche Darstellung der Steuerplatte mit einer mit ihr zusammenwirkenden Servostange zur Vorgabe einer Vorzugsbandlaufrichtung,

Fig. 8 eine schaubildliche Darstellung einer die Servostange umfassenden Steuervorrichtung des Laufwerkes nach den vorhergehenden Figuren mit weiteren schematisch dargestellten Einzelteilen des Laufwerkes,

Fig. 9A eine schaubildliche Darstellung eines Kommandomechanismus nach der Erfindung für das Laufwerk des Magnetbandkassettengerätes,

Fig. 9B eine Draufsicht auf den Kommandomechanismus nach Fig. 9A.

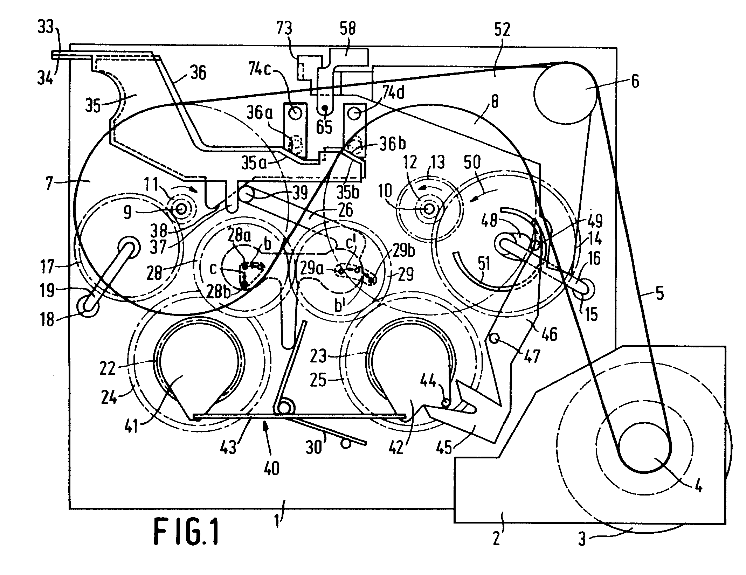

Das Magnetbandkassettengerät, wie in Fig. 1 dargestellt, weist ein Gestell 1 auf, das über eine Stütze 2 einen nur in einer Richtung umlaufenden Antriebsmotor 3 trägt. Das Abriebsritzel 4 des Motors 3 führt eine Peese 5, die über eine Umlenkrolle 6 über Schwungräder 7 und 8 derart geführt ist, daß die Schwungräder gegensinnig drehen. Die Schwungräder 7 und 8 sind im Gestell 1 gelagert. Die Schwungscheibe 7 ist fest verbunden mit einer Tonwelle 9, und die Schwungscheibe 8 ist fest verbunden mit einer Tonwelle 10. Weiterhin sind die Schwungscheibe 7 mit einem Zahnrad 11 und die Schwungscheibe 8 ist mit einem Zahnrad 12 verbunden. Über eine Rutschkupplung ist koaxial zu dem Zahnrad 12 ein weiteres Zahnrad 13 auf der Schwungscheibe 8 drehbar angeordnet. Mit dem Zahnrad 12 auf der Schwungscheibe 8 ist ständig kämmend ein als Zahnrad ausgebildetes Schaltrad 14 in Eingriff. Dieses Zahnrad 14 ist schwenkbar um eine Achse 15. Die Achse 15 trägt einen in Fig. 1 schematisch dargestellten Schwenkarm 16, auf dem drehbar das Schaltrad 14 gelagert ist. In ähnlicher Weise kämmt mit dem Zahnrad 11 ständig ein Zahnrad 17. Dieses Zahnrad 17 ist drehbar um eine Schwenkachse 18 mittels eines schematisch dargestellten Schwenkarmes 19.

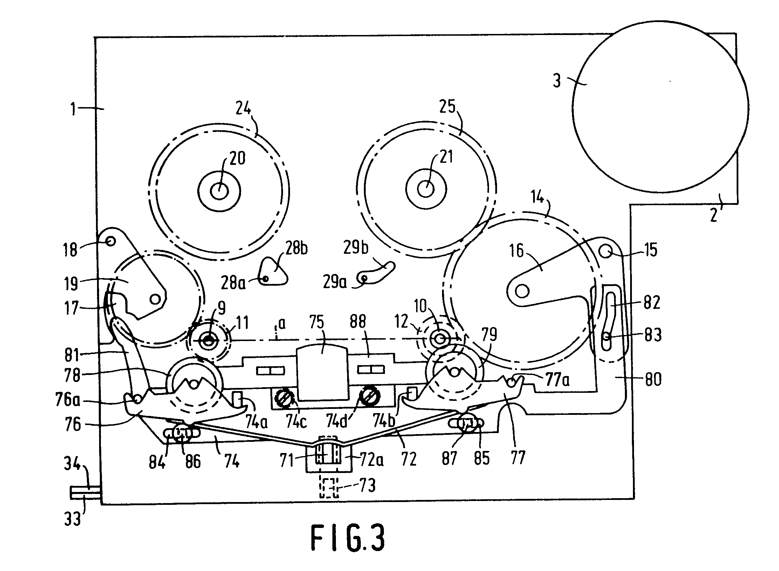

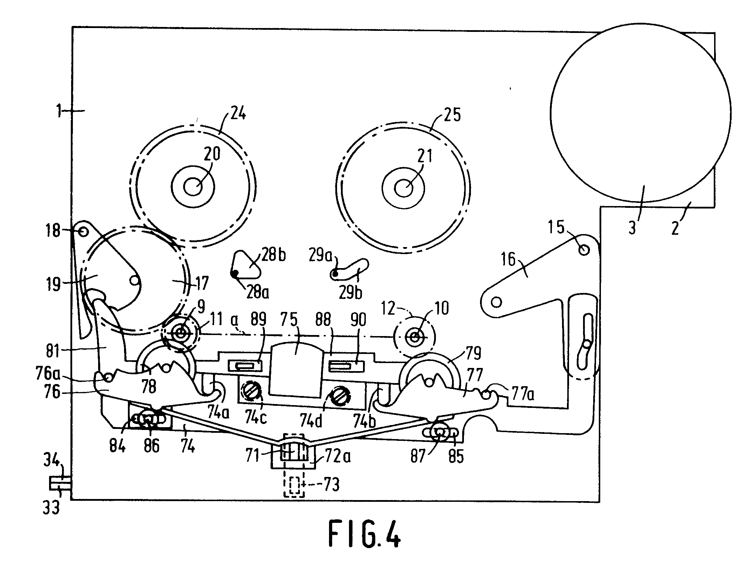

Wie auch in Fig. 3 und 4 dargestellt, sind drehbar im Gestell 1 Wickeldorne 20 und 21 gelagert. Diese Wickeldorne 20 und 21 sind fest verbunden mit Schnellspulrädern 22, 23. Über Rutschkupplungen sind mit den Wickeldornen 20, 21 Spielräder 24, 25 verbunden.

In Fig. 3 ist dargestellt, wie das Spielrad 25 über das Schaltrad 14 von dem Zahnrad 12 angetrieben wird. In Fig. 4 ist auf ähnliche Weise zu sehen, wie das Spielrad 24 über das Zahnrad 17 vom Zahnrad 11 angetrieben wird.

Ein Bügel 26, der verschiebbar im Gestell 1 gelagert ist, trägt nebeneinander zwei Zahnräder 28, 29 (siehe Fig. 1). Eine Feder 30 drückt den Bügel 26 immer in eine in Fig. 1 dergestellte Ausgangsposition.

Der Bügel 26 trägt zwei Stifte 28a und 29a, die in einem dreieckigen Loch 28b bzw. einem Schlitz 29b verschiebbar sind im Gestell 1.

Zum schnellen Vor- und Rücklauf sind zwei nebeneinander angeordnete, längsverschiebliche Bedienungsstangen 33 und 34 vorgesehen, die mit Schiebern 35, 36 verbunden sind. Diese Schieber 35 und 36 wirken auf den Bügel 26 ein. Dazu ist der Schieber 35 mit einem Ansatz 37 versehen, der Schieber 36 trägt entsprechend eine Auflauffläche 38. Der Ansatz 37 und die Auflauffläche 38 arbeiten auf einen Stift 39 des Bügels 26. Weiter sind die Schieber 35, 36 mit Auflaufflächen 35a, 35b bzw. 36a, 36b versehen, die arbeiten können auf Stifte 74c, 74d einer Kopfplatte 74 (siehe auch Fig. 3, 4).

Wenn auf noch in Verbindung mit Fig. 9 zu beschreibende Weise durch Eindrücken der Bedienungsstange 33 der Ansatz 37 gegen den Stift 39 des Bügels 26 drückt, kommt erst das Zahnrad 29 in Eingriff mit dem Zahnrad 13. Dabei macht der Stift 28a eine Bewegung in Richtung des Pfeiles b und der Stift 29a eine Bewegung in Richtung des Pfeiles c'. Bei weiterer Bewegung fährt der Stift 29a weiter in Richtung des Pfeiles b' und kommt das Zahnrad 29 auch in Eingriff mit dem Zahnrad 23. Das Magnetband wird jetzt mit dem Wickeldorn 21 schnell aufgewickelt. Wird auf noch in Verbindung mit Fig. 9 zu beschreibende Weise die andere Bedienungsstange 34 eingedrückt, dann wirkt die Auflauffläche 38 auf den Stift 39 des Bügels 26 ein, wodurch der Stift 28a in Richtung des Pfeiles c und der Stift 29a in Richtung des Pfeiles c' fährt, womit das Zahnrad 29 mit dem Zahnrad 13 und das Zahnrad 28 mit dem Zahnrad 22 in Eingriff kommt. Dadurch wird der andere Wickeldorn 21 zum Schnellspulen angetrieben.

Wenn die Kopfplatte 74 in eine Spielstellung gelangt ist, nehmen die Stifte 74c, 74d eine der gestrichelten Lagen in Fig. 1 ein. Die Lagen stimmem überein mit den Lagen gemäß Fig. 3 bzw. Fig. 4. Das Eindrücken der Bedienungsstange 33 bzw. 34 hat jetzt zur Folge, daß über die Auflauffläche 35a, 35b bzw. 36a, 36b die Stifte 74c, 74d und damit die Kopfplatte 74 nach links geschoben werden, so daß ein Tonkopf 75 und Andruckrollen 78, 79 abgehoben werden von dem Magnetband.

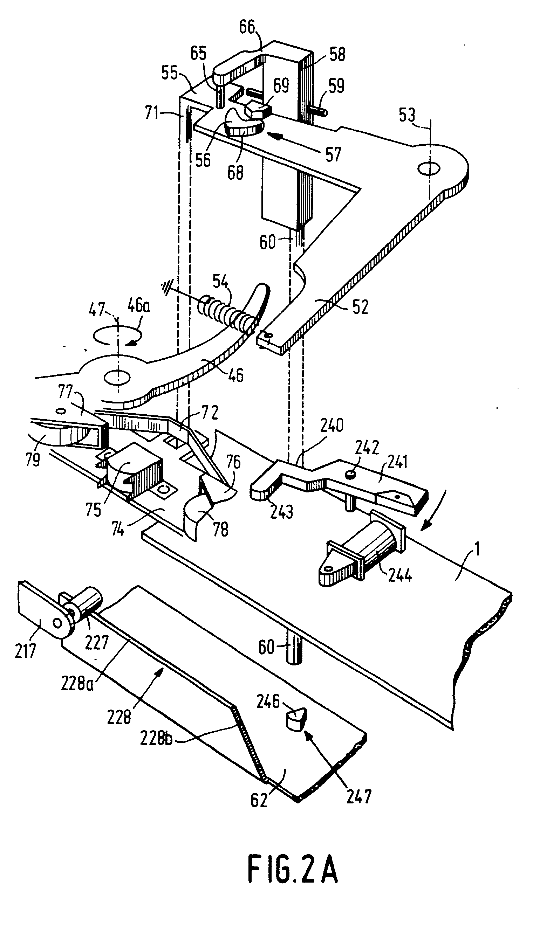

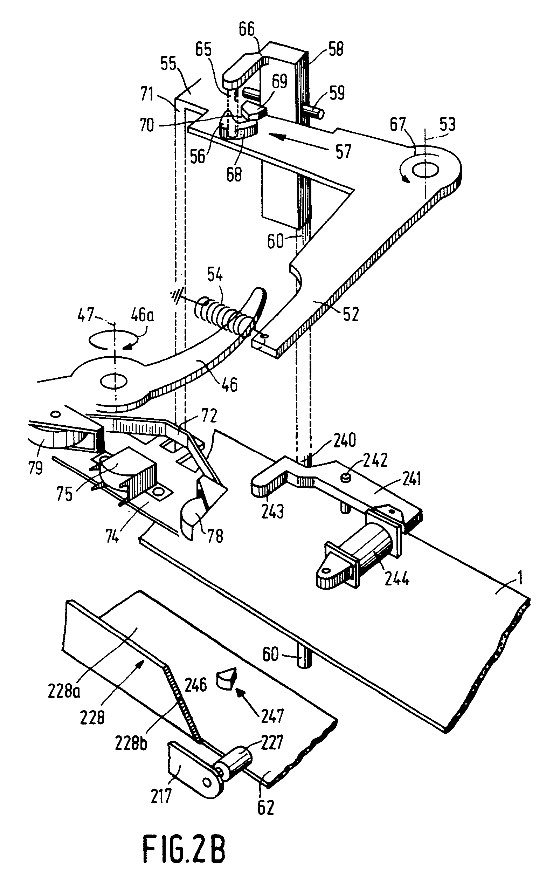

Ein Detektionsorgan 40, bestehend aus zwei Scheiben 41, 42 und einer Verbindungsstange 43, ist über Rutschkupplungen mit den Wickeldornen 20, 21 verbunden. Auf der Scheibe 42 ist ein Stift 44 angeordnet, der innerhalb einer Schaltgabel 45 liegt. Die Schaltgabel 45 ist an einem Schaltelement 46 angeordnet, die um ein Lager 47 drehbar ist (vergl. auch Fig. 2A und 2B). Das Schaltrad 14 trägt in seiner Mitte erhaben vorstehend einen ein wenig ellipsenförmigen Nocken 48. Das Schaltelement 46 greift über das Schaltrad 14 und trägt einen Stift 49, der bei nach innen geschwenktem Schaltelement 46 um den Nocken 48 herumfahren kann bei Drehung des Schaltrades in Richtung eines Pfeiles 50. Um den Nocken 48 herum erstreckt sich in einem größeren Abstand eine erhaben aus dem Schaltrad 14 heraustehende, spiralförmige Steuerkurve 51. Auch diese Steuerkurve 51 kann mit dem Stift 49 an dem Schaltelement 46 zusammenwirken, und zwar immer dann, wenn das Detektionsorgan den Bandstillstand feststellt. In diesem Fall drückt der Stift 44 nicht mehr gegen die Schaltgabel 45, wodurch der Stift 49 am Schaltelement 46 nicht mehr nach innen in Richtung auf den Nocken 48 belastet wird, sondern stehen bleibt und bei fortgehender Drehung des Schaltrades 14 in Richtung des Pfeiles 50 auf die Außenseite der Steuerkurve 51 gelangt. Weil die Steuerkurve 51 spiralförmig ist, wird das Schaltelement 46 im Uhrzeigersinn (Pfeil 46a in Fig. 2A, 2B) um sein Lager 47 verschwenkt, wodurch das Schaltelement 46 gegen ein Verbindungselement 52 gedrückt wird.

Das Verbindungselement 42 ist ein doppelarmiger Hebel, der um ein Lager 53 schwenkbar ist. Wie aus den schaubildlichen Darstellungen in Fig. 2A und 2B zu erkennen ist, ist das Verbindungselement 52 aufgrund der Wirkung einer Feder 54 im Uhrzeigersinn federbelastet. Damit spannt die Bewegung des Schaltelementes 46 die Feder 54.

Der von dem Angriffspunkt des Schaltelementes 46 abgewandte Hebelarm 55 des Verbindungselementes 52 trägt eine Herzkurve 56, die zu einem Rastmechanismus 57 gehört. Zu dem Rastmechanismus 57 gehört auch ein Rasthebel 58, der um eine Achse 59 verschwenkbar ist. Die Achse 59 liegt parallel zu der Oberfläche des Gestelles 1 und zu einer gedachten Verbindungslinie a zwischen den Tonwellen 9 und 10. Der Rasthebel 58 trägt auf der zur Herzkurve 56 gerichteten Seite einen Führungsstift 60, der durch ein Loch 61 im Chassis 101 hindurchgreift. Die Verstellung des Rasthebels um die Achse 59 wird später in Verbindung mit Fig. 8 erläutert.

Der Rasthebel 58 trägt einen Raststift 65, der in die Herzkurve 56 einfahrbar ist und die Herzkurve umfahren kann. Die Umfahrbarkeit wird z. B. über ein Filmgelenk 66 herbeigeführt. In Fig. 2A liegt der Stift 65 oberhalb der Herzkurve 56. In Fig. 2B ist der Stift 65 in den Bereich der Herzkurve 56 hineingefahren. Damit kann der Stift 65 mit der Herzkurve 56 zusammenwirken, wenn das Schaltelement 46 das Verbindungselement 52, wie in der Darstellung nach Fig. 2B, entgegen dem Uhrzeigersinn in Richtung eines Pfeiles 67 verschwenkt. Bei diesem Veschwenken ist der Stift 65 an einer Seitenwand 68 der Herzkurve 56 entlang gelaufen. Ein Führungsnocken 69 sorgt dafür, daß der Stift 65 in eine Mulde 70 der Herzkurve 56 einfällt.

Am Hebelarm 55 ist ein Nocken 71 angeordnet. Dieser Nocken 71 wirkt, wie sich aus den Fig. 3 und 4 ergibt, mit einer Blattfeder 72 zusammen und erstreckt sich durch einen Längsschlitz 23 im Gestell 1 hindurch. Die Blattfeder 72 drückt mit ihren freien Enden gegen Halterungen 76, 77, die auf der Kopfplatte 74 gelagert sind. Diese Kopfplatte 74 trägt in ihrer Mitte den Tonkopf 75 und beiderseits des Tonkopfes 75 die Halterungen 76, 77, in denen die Andruckrollen 78, 79 gelagert sind. Die Halterungen werden gegen Anschläge 74a, 74b der Kopfplatte 74 gedrückt.

Die Kopfplatte 74 hat abgewinkelte Enden 80, 81. Das abgewinkelte Ende 80 weist einen Schlitz 82 auf, in dem ein Stift 83 verschiebbar ist, der auf dem Schwenkarm 16 befestigt ist. Dadurch ist in der Stellung nach Fig. 3 der Schwenkarm 16 derart um die Achse 15 verschwenkt, daß das Schaltrad 14 mit dem Spielrad 25 und dem Zahnrad 12 kämmt. Dementsprechend ist in Fig. 4 dargestellt, daß das abgewinkelte Ende 81 der Kopfplatte 74 den Schwenkarm 19 um die Schwenkachse 18 geschwenkt hat, wodurch das Zahnrad 17 mit dem Spielrad 24 und dem Zahnrad 11 kämmt. Dementsprechend ist in der Stellung nach Fig. 3 die Druckrolle 79 gegen die Tonwelle 10 gedrückt, während in der Stellung nach Fig. 4 die Andruckrolle 78 gegen die Tonwelle 9 gedrückt ist.

In der Kopfplatte 74 sind parallel zu der Verbindungslinie a zwischen den Tonwellen 9, 10 Längsschlitze 84, 85 angeordnet, in denen Leitstifte 86, 87 verschiebbar sind.

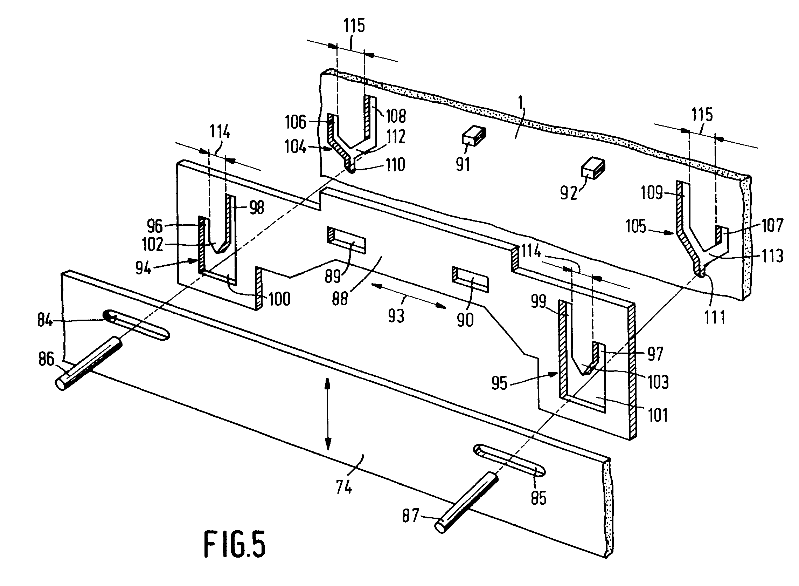

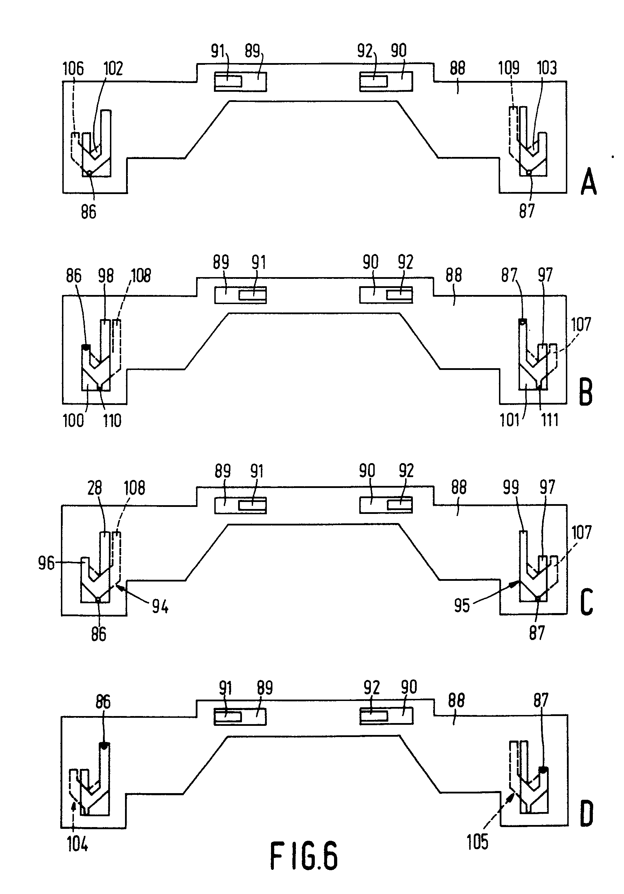

Fig. 5 zeigt anhand der Explosionsansicht in der Kopfplatte 74 geführte Leitstifte 86, 87, die in den Längsschlitzen 84, 85 geführt sind. Die Leitstifte sind damit parallel zu der Verbindungslinie a zwischen den Tonwellen verschiebbar. Die Halterung der Leitstifte 86, 87 an der Kopfplatte 74 ist in den Zeichnungen nicht näher dargestellt. Bei einer einfachen Ausführungsform sind die Leitstifte wie die Stifte von Reißnägeln an einer kappenförmigen Platte befestigt. Es ist aber ebensogut auch möglich, die Leitstifte an den freien Enden von federnden Zungen anzuordnen, die an der Kopfplatte 74 befestigt sind.

Zwischen der Kopfplatte 74 und der Chassisplatte an der Oberseite des Gestells 1 ist eine als Steuermittel dienende Steuerplatte 88 angeordnet. Diese Steuerplatte 88 ist mit Längsschlitzen 89, 90 versehen, durch die Führungsnocken 91, 92 der Chassisplatte hindurchgreifen. Dadurch ist die Steuerplatte 88 parallel zu der gedachten Verbindungslinie zwischen den Tonwellen 9, 10 verschiebbar. Die Verschiebbarkeit ist in Fig. 5 durch einen Doppelpfeil 93 angegeben.

Die Steuerplatte 88 ist an beiden Enden mit U-förmigen Schlitzen 94, 95 versehen. Von den U-förmigen Schlitzen 94 und 95 ist jeweils ein Schenkel 96, 97 kürzer und ein Schenkel 98, 99 länger ausgebildet. Die kürzeren Schenkel sind voneinander weg angeordnet und die längeren Schenkel dementsprechend aufeinander zu. Die Verbindungsbasis 100 und 101 zwischen den kürzeren und längeren Schenkeln ist stark verbreitert ausgebildet. Zwischen den längeren und kürzeren Schenkeln sind Materialzungen 102 und 103 ausgebildet, die an ihren zur Basis 100, 101 gerichteten Enden angespitzt sind.

In der Chassisplatte des Gestells 1 sind als Leitschlitzanordnungen dienende gabelförmige Leitschlitze 104 und 105 angeordnet mit zwei den Gabelzinken entsprechenden Schenkeln, von denen jeweils einer 106, 107 kürzer als der andere 108, 109 ausgebildet ist. Am Gabelschaft ist ein mittiger Einlaufschlitz 110, 111 vorgesehen, der sich an den trichterförmigen Gabelfuß 112, 113 anschließt. Der gegenseitige Abstand 114 der Schenkel der U-förmigen Leitschlitze 94, 95 in der Steuerplatte 88 ist geringer als der gegenseitige Abstand 115 der Schenkel der gabelförmigen Leitschlitze 104, 105.

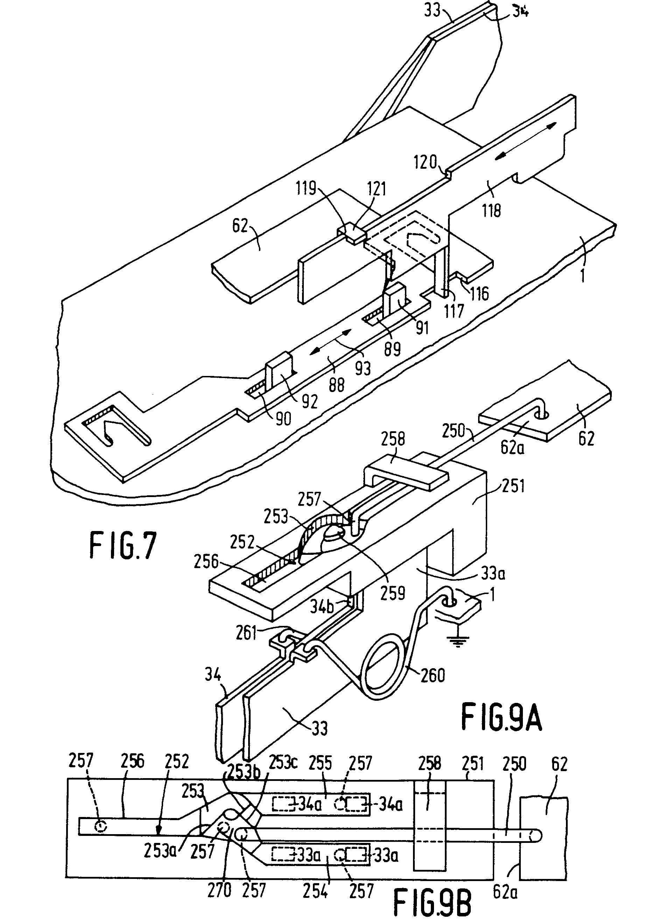

Fig. 7 zeigt anhand einer schaubildlichen Darstellung auf der Chassisplatte des Gestells 1 die Steuerplatte 88. Die Steuerplatte 88 ist mit einem Anschlag 116 versehen, gegen den eine Nase 117 eines Zwischenschiebers 118 stoßen kann, der parallel zu der gedachten Verbindungslinie a zwischen den Tonwellen 9 und 10 verschiebbar ist (Fig. 4 und 5).

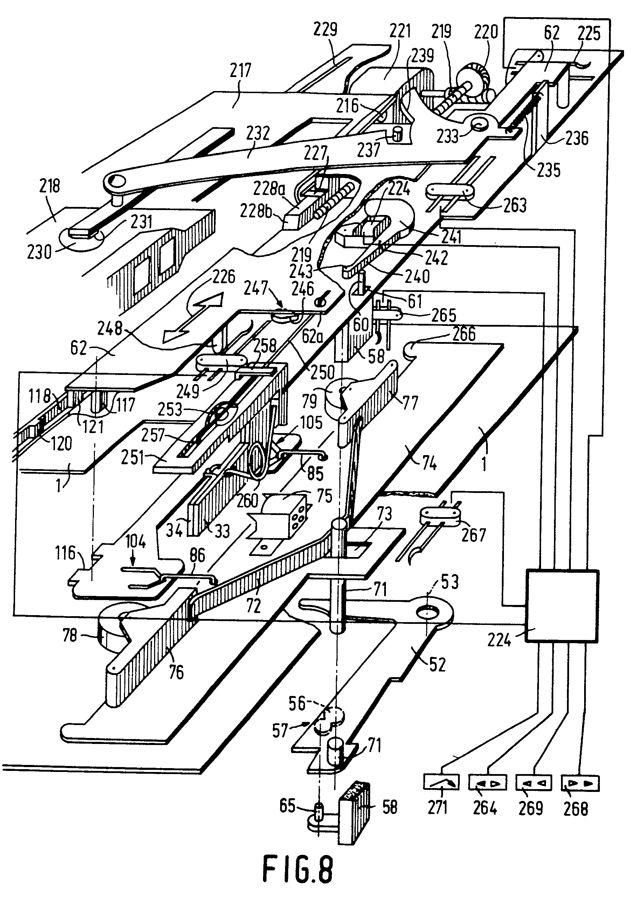

Der Zwischenschieber 118 ist mit zwei Anschlägen 119, 120 versehen, zwischen die ein Mitnehmer 121 einer noch in Verbindung mit Fig. 8 zu beschreibenden Servostange 62 drücken kann. Wenn die Stange 62 nach rechts für das Auswerfen einer Kassette bewegt wurde, dann hat sie den Zwischenschieber 118 nach rechts mitgenommen, weil der Mitnehmer 121 gegen den Anschlag 120 gestoßen ist. Dadurch ist die Nase 117 gegen den Anschlag 116 gestoßen. Die Steuerplatte 88 ist damit in Richtung des Doppelpfeiles 93 nach Fig. 7 nach rechts verschoben worden und in einer Vorzugslage nach Fig. 6C festgelegt. Wird die Stange 62 demgegenüber nach links bewegt, dann stößt der Mitnehmer 121 gegen den Anschlag 119. Dadurch ist die Nase 117 von dem Anschlag 116 abgerückt und ist die Steuerplatte 88 frei beweglich im Rahmen des zuvor beschriebenen Bewegungsablaufes.

Zu dem in Fig. 8 dargestellten Servomechanismus gehört eine Servostange 62, die seitlich eines Kassettenliftes 217 in Längsrichtung im Gestell 1 verschieblich ist. Die Längsrichtung ist die Einzieh- und Auswurfrichtung einer Kassette 218. Die Servostange 62 wird verschoben mit Hilfe einer Gewindespindel 219. Diese Gewindespindel wird über ein Schneckengetriebe 220 angetrieben von einem reversierbaren Servomotor 221; er wird gesteuert von einer Steuerschaltung 224 nach Art eines Mikroprozessors. Ein Schalter 225 auf dem Gestell 1 begrenzt nach einer Richtung die Schiebebewegung der Servostange 62. Der Schalter 225 ist von der Schaltvorrichtung 224 als Endstellungsmarkierung der Servostange 62 in Richtung eines Doppelpfeiles 226 erkennbar, an der alle Steuerstangenhübe referieren.

Der um eine Achse 216 schwenkbare Lift 217 ist mit Hilfe eines Stiftes 227 höhengesteuert geführt an einer Kulisse 228 der Servostange 62. Der Stift 227 wird mittels einer mit dem Gestell verbundenen Torsionsfeder 229 niedergedrückt gegen die Kulisse 228. Ein erster Teil 228a der Kulisse 228 erstreckt sich parallel zum Chassis 1, knickt danach in einem Bereich 228b ein Stück nach unten und endet dort.

In ein Wickeldornloch 230 der Kassette 218 greift ein Mitnehmer 231 ein, sobald die Kassette bis zu ihm in das Gerät eingeschoben ist. In dieser eingerasteten Position steht die Kassette etwa noch 30 mm aus dem Gerät heraus. Der Mitnehmer 231 ist schwenkbar verbunden mit einem Auswerfer 232, der um eine Achse 233 des Chassis 1 schwenkbar gelagert ist. Der Auswerfer 232 wird mittels einer Zugfeder 235 gegenüber einem Haken 236 zum Gestell 1 verspannt. Auf der Servostange 62 ist ein Stift 237 angeordnet. Dieser Stift 237 kann über einen Leitteil 239 den Auswerfer 232 gegen die Wirkung der Zugfeder 235 verschwenken.

Der Rasthebel 58 greift mit seinem Stift 60 durch das Loch 61 im Chassis 1 und liegt an einer Kante 240 an dem Riegelhebel 241. Der Riegelhebel 241 ist schwenkbar um eine Achse 242. Der Rasthebel 58 ist durch das Verbindungselement mit Feder 54 bestrebt, den Riegelhebel 241 von einem Riegelmagneten 244 wegzuschwenken. Eine Nase 243 am Riegelhebel 241 kann auf eine Kulisse 246 an der Servostange 62 auflaufen. Der Riegelmagnet 244 ist mit der Steuerschaltung 224 elektrisch verbunden.

Die Kulisse 246 gehört zu einer Nase 247, die auf die Servostange 62 aufgespritzt ist. Beim Verschieben der Servostange 62 kann die Kulisse 246 auf die Nase 243 des Riegelhebels 241 auflaufen und den Riegelhebel dabei so verschieben, daß dieser sich an den Riegelmagneten 244 anlegt. Ein einstellbarer Nocken 248 arbeitet gleichzeitig mit einem Spiel- und Umkehrschalter 249 zusammen. Wenn die Nase 248 an dem Schalter 249 vorbei läuft, dann wird dieser normalerweise geschlossene Schalter kurz geöffnet und wieder geschlossen.

Nahe einem Längsende 62a der Servostange 62 greift ein Kommandoglied 250 in Form einer Verbindungsstange an. Die Verbindungsstange ist in ein Loch der Servostange 62 mit einer Abbiegung gelenkig eingehängt. Die Verbindungsstange 250 reicht bis zu einem Kommandoblock 251. In diesem Kommandoblock ist ein mehrteiliger Verbindungsweg 252 vorgesehen. Dieser mehrteilige Verbindungsweg 252 besteht aus einem immer im gleichen Richtungssinn durchfahrbaren, in sich rundgeschlossenen Leitweg 253, einer ersten Kommandobahn 254, einer zweiten Kommandobahn 255 und einer dritten Kommandobahn 256. In diesen Bahnen kann ein abgebogenes Ende der Verbindungsstange 250 in Form eines Kommandostiftes 257 eingreifen. Die Kommandobahnen 254 und 255 sind als durchgehende parallele Schlitze ausgebildet, in die von oben der Kommandostift 257 eingreifen kann und in die von unten her Mitnehmer 33a und 34a der Bedienungsstangen 33 und 34 eingreifen. Der Kommandostift 257 wird mit Hilfe eines Niederhalters 258 elastisch in die Bahnen hineingedrückt gehalten. Der Leitweg 253 besteht aus einer um einen Kern 259 herum laufenden Vertiefung im Kommandoblock 251. Der Boden des Leitweges 253 ist mit Absätzen 253a, 253b und 253c versehen. Diese Absätze sorgen dafür, daß der Kommandostift 257 im Leitweg 253 nur im Uhrzeigersinn umlaufen kann und nicht entgegen dem Uhrzeigersinn. Federn 260 und 261 sorgen dafür, daß die Bedienungsstangen 33 und 34 in Fig. 9 nach Freigabe durch den Kommandostift 257 immer nach links gedrückt werden.

Die Funktionsweise der Vorrichtung läßt sich wie folgt beschreiben: Wird eine Kassette aus der vorher beschriebenen eingerasteten Position weiter nach innen verschoben über etwa 10 mm, dann wird durch den Auswerfer 232 in der Zeichnung nach Fig. 8 der Schalter 263 geschlossen.

Dadurch wird der Motor 221 gestartet und der Mikroprozessor 224 elektrisch angeschlossen. Die Servostange 62 wird in Fig. 8 nach rechts verschoben und läuft bis zu dem Reset-Schalter 225 nach rechts weiter. Bei dieser Verschiebung der Servostange senkt sich der Lift 217 ab, und zwar über die Kulisse 228a, 228b (Fig. 2A und 2B). Das Schließen des Reset-Schalters 225 hat zur Folge, daß der Mikroprozessor 224 in eine Ausgangslage geschaltet wird. Dies hat zur Folge, daß der Servomotor 221 seine Drehrichtung umkehrt und damit die Servostange 62 nach links verschiebt. Dabei läuft der Nocken 248 an dem Spiel-Umkehr-Schalter 249 vorbei, wobei dieser geöffnet wird, und der Servomotor schaltet ab, so daß die Servostange stehen bleibt. Der Laufwerksmotor 3 läuft jetzt an. Die Kulisse 246 ist dabei zwar auf die Nase 243 gestoßen, jedoch der Riegelhebel 241 hat sich nicht an den Riegelmagneten 244 angelegt, weil der Magnet noch nicht von der Schaltung 224 erregt ist. Dadurch ist der Stift 65 nicht in den Rastmechanismus 57 eingefahren und nicht verrastet.

Weil der Laufwerksmotor 3 angelaufen ist, drehen sich auch die Schwungscheiben 7 und 8, und zwar in gegensinniger Richtung. Gleichzeitig drehen sich die Zahnräder 11 und 12 und die mit ihnen kämmenden Zahnräder 14 und 15. Der Rasthebel 58 ist aus der Lage nach Fig. 2A in die Lage nach Fig. 2B gefahren, und der Raststift 65 kommt in Wirkbereich mit der Herzkurve 56 nach Fig. 2B.

Weil die Zahnräder 14 und 17 nicht in Eingriff sind mit den Zahnrädern 24 und 25, drehen die beiden Wickeldorne 20 und 21 nicht mit. Die Scheiben 41 und 42 sind über ihre separaten Reibungskupplungen mit den Wickeldornen 20, 21 verbunden und stehen damit auch still. Da beim Eindringen der Kassette ein Drehmoment auf das Schaltelement 46 fehlt, weil die Bandwickel nicht umlaufen und das Band still steht, bleibt das Schaltelement 46 in der in Fig. 1 dargestellten Stellung stehen und kommt damit mit dem Stift 49 auf die Außenseite der Steuerkurve 41. Das Schaltelement 46 macht nun eine Bewegung im Uhrzeigersinn gemäß Pfeil 46a (Fig. 2A) und schwenkt das Verbindungselement 52 entgegen dem Uhrzeigersinn (Pfeil 67). Weil der Rasthebel 58 geschwenkt ist und der Stift 65 der Herzkurve 56 im Wirkbereich ist, umläuft der Stift 65 nun die Wand 68 der Herzkurve 56 und fällt in die Mulde 70 ein. Damit ist das Verbindungselement in einer eingeschwenkten Stellung eingerastet (siehe Fig. 2B).

Durch das Schwenken des Verbindungselementes 52 entgegen dem Uhrzeigersinn in Richtung des Pfeiles 67 hat sich der Nocken 71 nach innen bewegt und gegen die Blattfeder 72 gedrückt. Die Blattfeder drückt ihrerseits über die Halterungen 76 und 77 gegen die Kopfplatte 74 und versucht, sie in Richtung auf die Tonwellen 9, 10 zu schieben. Nun kommt die Wirkung der Steuerplatte 88 zur Geltung.

Vor dem Einschwenken des Nockens 71 war die Kopfplatte 74 von den Tonwellen weggefahren. Die Leitstifte 86, 87 waren dadurch in die Einlaufschlitze 110 und 111 eingelaufen (vergl. Fig. 5). Die Steuerplatte 88 hat nach dem Auswerfen der vorhergehenden Kassette, wie schon in Verbindung mit Fig. 7 beschrieben, die aus Fig. 6C zu ersehende Stellung. Beim Vorfahren der Kopfplatte 74 in Richtung auf die Tonwellen 9, 10 fahren die Leitstifte 86, 87 nach vorn und laufen auf der rechten Seite der Zungen 102, 103 auf und zugleich in die rechten Schenkel 107 und 108 der gabelförmigen Leitschlitze 104, 105. Bei dem Einfahren der Leitstifte 86, 87 in die Schenkel 107 und 108 nehmen die Leitstifte 86, 87 die Steuerplatte 88 nach rechts mit, so daß sich nunmehr die Schenkel 98, 108 und 97, 107 überdecken. Der rechte Leitstift 87 findet damit in dem kürzeren Schenkel beim Vorfahren einen Anschlag, während der linke Leitstift 86 frei in Richtung auf die Tonwelle 9 vorlaufen kann (Fig. 6D). Damit schwenkt die vorgedrückte Kopfplatte 74 auf der linken Seite derartig nach vorn, daß die linke Andruckrolle 78 gegen die linke Tonwelle 9 stößt. Die andere Tonwelle bleibt unbelastet. Die Kopfplatte 74 nimmt für sehr kurze Zeit die aus Fig. 4 zu ersehende Stellung ein.

Weil der Stift 65 nicht durch den Rastmechanismus 57 verrastet ist, bewegt sich die Kopfplatte unter der Wirkung der Blattfeder 72, und die Feder 54 wandert in die Ausgangslage zurück. Ein Schalter 267 wird dann geschaltet, wodurch der Laufwerksmotor 3 abgeschaltet wird. Dieser Vorgang läuft so schnell ab, daß es der Benutzer gar nicht merkt. Dies ist notwendig, da die Bewegung der Steuerplatte 88 nach Fig. 6D zur Reverse-Abspielstellung führen würde. Es ist aber gewünscht, daß das Laufwerk beim Einschieben einer Kassette erst auf Vorlauf geschaltet wird. Dieser Vorgang wird durch den Mikroprozessor 224 dadurch erreicht, daß jetzt der Servomotor 221 wieder startet und die Servostange 62 nach rechts bewegt bis zum Reset-Schalter 225 und von dort wieder nach links läuft, bis sich der Riegelhebel 241 an den Riegelmagneten 244 angelegt hat. Da jetzt der Magnet 244 elektrisch erregt wird, bleibt der Riegelhebel 241 in dieser Stellung, so daß der Stift 65 von dem Rastmechanismus 57 gerastet werden kann. Der Spiel-Umkehr-Schalter 249 wird von dem Nocken 248 wieder geöffnet, die Servostange 62 hält an, der Laufwerksmotor 3 wird erneut in Betrieb gesetzt.

Beim erneuten Inbetriebsetzen des Laufwerksmotors 3 wird die Steuerplatte 88 verschoben. Beim Nach-außen-Fahren der Kopfplatte 75 sind die Leitstifte 86, 87 in die Einlaufschlitze 110 und 111 eingelaufen. Die Steuerplatte 88 ist in ihrer alten Stellung verblieben. Die Zungen 102 und 103 liegen damit noch immer in einer nach rechts verschobenen Lage gegenüber der mittigen Lage der Einlaufschlitze 110 und 111 (Fig. 6A). Beim erneuten Start des Laufwerksmotors 3 wird das Verbindungselement 52 wieder durch das Schaltelement 46 entgegen dem Uhrzeigersinn verschwenkt und damit die Kopfplatte 74 mittels des Stiftes 71 nach vorn geschoben.

Die Steuerplatte 88 hat die aus Fig. 6A zu ersehende angenommene Stellung. Beim Vorfahren der Kopfplatte 74 in Richtung der Tonwellen 9, 10 fahren die Leitstifte 86, 87 nach vorn und laufen auf der linken Seite der Zungen 102, 103 auf und zugleich in die linken Schenkel 106 und 109 der gabelförmigen Leitschlitze 104, 105. Bei dem Einfahren der Leitstifte 86, 87 in die Schenkel 106 und 109 nehmen die Leitstifte 86, 87 die Steuerplatte 88 nach links mit, so daß sich nunmehr die Schenkel 96, 106 und 99, 109 überdecken. Der linke Leitstift 86 findet damit in dem kürzeren Schenkel beim Vorfahren einen Anschlag, während der rechte Leitstift 87 frei in Richtung auf die Tonwelle 10 vorlaufen kann (Fig. 6B). Damit schwenkt die vorgedrückte Kopfplatte 74 auf der rechten Seite derartig nach vorn, daß die rechte Andruckrolle 79 gegen die rechte Tonwelle 10 stößt. Die andere Tonwelle bleibt unbelastet. Damit läuft das Band in der aus Fig. 3 zu ersehenden Vorwärts-Spiel-Richtung.

Beim Erreichen des Bandendes bleibt das Band stehen. Dadurch wird das Schaltelement 46 mit seinem Stift 49 erneut nach außen im Uhrzeigersinn geschwenkt. Das Verbindungselement 52 wird entgegen dem Uhrzeigersinn verschwenkt (Fig. 2B) in Richtung des Pfeiles 67. Das Verbindungselement 52 wird bei diesem Bewegen über den Normalhub, der bei der eingerasteten Lage vorliegt, in einem Überhub weitergeschwenkt. Der Überhub wird möglich, da der Nocken 71 gegen die Blattfeder 72 über die Hebel 76, 77 an der Kopfplatte 74 drückt und damit Ausweichspielraum in Richtung auf die Kopfplatte hat. Bei diesem Überhub fährt der Stift 65 aus der Mulde 70 heraus, und der Rastmechanismus 57 entrastet. Unter Wirkung der Feder 54 schwenkt das entrastete Verbindungselement 52 nun im Uhrzeigersinn, so daß der Nocken 71 nach außen fährt. In dieser Lage ist die Kopfplatte nach außen zurückgefahren, und die Leitstifte 86, 87 sind wieder in die Einlaufschlitze 110 und 111 eingelaufen. Die Steuerplatte 88 ist in ihrer alten Stellung verblieben. die Zungen 102 und 103 liegen noch immer in einer nach links verschobenen Lage gegenüber der mittigen Lage der Einlaufschlitze 110 und 111 (Fig 6C).

Es kommt nun der automatische Reversiervorgang. Das Schaltrad 14 dreht nach wie vor weiter. Da sich die Kopfplatte 74 zurückgezogen hat, hat sie ihr umgebogenes Ende 80 auch nach außen gezogen und damit den Schwenkarm 16 derart verschwenkt, daß das Schaltrad 14 außer Eingriff ist vom Spielrad 25. Damit wird das Spielrad 25 nicht mehr angetrieben. Das Detektionsorgan 40 stellt Bandstillstand fest. Aufs Neue wird das Schaltelement 46 im Uhrzeigersinn verschwenkt. Das Schaltelement 46 drückt gegen das Verbindungselement 52 und schwenkt dieses erneut entgegen dem Uhrzeigersinn in Richtung des Pfeiles 67. Damit umfährt der Stift 65 erneut die Herzkurve 56, und der Stift fällt letztlich wieder in die Mulde 70 ein; das Verbindungselement 52 verrastet. Der Nocken 71 ist nun wieder nach vorn geschoben, und die Kopfplatte 74 nimmt nach ihrem Vorfahren die aus Fig. 4 ersichtliche Stellung ein. Das Zahnrad 17 ist über das umgebogene Ende 81 der Kopfplatte 74 mit dem Zahnrad 11 und mit dem Spielrad 24 im Eingriff. In dieser Lage nach Fig. 4 liegt die Andruckrolle 78 an der Tonwelle 9 an, und das Band wird in entgegengesetzter Richtung transportiert.

Die Umkehrung der Bandtransportrichtung ist wieder durch die Leitschlitzanordnung bewirkt worden, die in Fig. 6 in verschiedenen Stellungen dargestellt ist. Die letzte beschriebene Stellung war die Stellung nach Fig. 6C. In dieser Stellung ist die Steuerplatte 88 nach links verschoben; die Leitstifte 86, 87 liegen in den Einlaufschlitzen 110 und 111. Durch das erneute Vorfahren der Kopfplatte 74 sind die Leitstifte 86, 87 ebenfalls nach vorn gefahren und sind gegen die rechten Schrägflächen der angespitzten Zungen 102 und 103 gelaufen. Die Leitstifte 86, 87 wurden dadurch nach rechts verschoben und konnten weiter einfahren in die Schenkel 108 und 107. Die Querverschiebung der Leitstifte 86, 87 ist möglich durch das Verrutschen der Leitstifte 86, 87 in den Längsschlitzen 84, 85. Bei dem Einfahren in die Schenkel 107 und 108 haben die Leitstifte 86, 87 die Steuerplatte 88 nach rechts mitgenommen, so daß sich nunmehr die Schenkel 108 und 98 sowie 107 und 97 überdecken. Damit haben sich die Zungen 102, 103 wieder so versetzt, daß bei ihrem erneuten Zurückfahren und Vorfahren der Leitstifte diese dann wieder auf die linken Schrägflächen der angespitzten Zungen 102 und 103 auflaufen können. Die Stellung der Leitschlitzanordnung in diesem Fall ist aus Fig. 6D zu ersehen. Der Leitstift 87 hat in den kürzeren Schenkeln 107 und 97 auf seinem Vorfahrweg einen Anschlag vorgefunden, der die Kopfplatte 74 daran hindert, auf der rechten Seite weiter vorzufahren. Auf der linken Seite hat der Leitstift 86 keinen Anschlag vorgefunden, und er konnte in den Schenkeln 108 und 98 so weit vorfahren, daß die Feder 72 die linke Seite der Kopfplatte 74 die Andruckrolle 78 gegen die Tonwelle 9 drücken konnte. Diese Stellung ist aus Fig. 4 zu ersehen.

Es wird bemerkt, daß ein Spurschalter 265 vorgesehen ist, der dem Mikroprozessor 224 sagt, in welcher Richtung das Band abgespielt wird. Der Spurschalter 265 wird von einer Nase 266 an der Kopfplatte 74 angestoßen in der Lage nach Fig. 3. In der anderen Lage der Kopfplatte 74 nach Fig. 4 ist er offen. Der Schalter 265 sorgt dafür, daß abhängig von der Laufrichtung die richtigen Spuren des Magnetkopfes 75 geschaltet sind.

Es ist ohne weiteres auch ein Reverse-Betrieb während des normalen Spielbetriebes per Hand zu erreichen. Dazu wird durch kurzes Antippen einer Taste 264 der Riegelmagnet 244 abgeschaltet, und der Riegelhebel 241 fällt ab unter Wirkung der Feder 54 am Verbindungselement 52. Der Stift 60 kippt damit in der Zeichnung nach Fig. 8 nach links. Der Rastmechanismus 57 wird entrastet, weil der Stift 65 aus seinem Wirkbereich herausfährt. Dadurch kann die Kopfplatte 74 ausfahren. Der Laufwerksmotor 3 bleibt nun durch Schalten des Schalters 267 stehen, bis der Servomotor 221 die Servostange 62 einmal gegen den Schalter 225 und wieder zurückgefahren hat in die Spielstellung, wobei der Schalter 249 durch den Nokken 248 wieder geöffnet ist. Während dieser Bewegung hat die Kulisse 246 den Riegelhebel 241 wieder an den Riegelmagneten 244 angeklebt. Der Rastmechanismus 57 ist durch das Einfahren des Stiftes 65 wieder in Funktion gebracht worden. Die Steuerschaltung 224 setzt wieder den Laufwerksmotor 3 in Betrieb. Der Transporthebel 52 wird verschwenkt und die Kopfplatte 74 eingefahren. Dabei hat sich zugleich die Bandlaufrichtung umgekehrt mit Hilfe der Steuerplatte 88 nach Fig. 5 und 6.

Zum Schnellspulen wird, abhängig von der Richtung, eine der mit der Steuerschaltung elektrisch verbundenen Schnellspul-Tiptasten 268, 269 getippt. Der Riegelmagnet 244 bleibt ausgeschaltet über die Steuerschaltung 224.

In der Spielstellung liegt der Kommandostift 257 im Startbereich 270 des rundgeschlossenen Leitweges 253. Der Kommandostift 257 liegt mit Toleranz in dem Startbereich 270. Diese Toleranz kann eingestellt werden durch einen nicht dargestellten Justierblock, der die Nocken 248 einstellt. Dadurch kann das Schließmoment des Schalters 249 eingestellt werden. Der Variationsbereich der Stellung des Stiftes 257 liegt zwischen der ausgezogenen Stellung des Stiftes 257 und einer schraffierten Stellung (Fig. 9B). Es wird davon ausgegangen, daß in dem Bereich, wo auf ein Schnellspulen übergegangen werden soll, normaler Spielbetrieb in der Vorwärtsrichtung vorliegt. Drückt man nun auf die Schnellspul-Tiptaste 268, dann steuert die Steuerschaltung 224 den Servomotor 221 so an, daß die Servostange 62 sich nach rechts verschiebt (Fig. 8, 9A und 9B). Der Kommandostift 257 fährt nun in die erste Kommandobahn 254 ein. Dabei nimmt er den Mitnehmer 33a der Bedienungsstange 33 nach rechts mit bis in die in Fig. 9B schraffiert dargestellte rechte Stellung. Gleichzeitig haben sich die Zahnräder nach Fig. 1 so verstellt, daß das Band in der Vorwärtsrichtung schnell transportiert wird. Mittels der Schrägfläche 35a, 35b wurden die Stifte 74c, 74d verschoben, was zur Folge hatte, daß die Kopfplatte 74 vom Band abgerückt ist (Fig. 1). Der Bewegungshub der Kopfplatte 74 ist aber verkürzt, so daß der Schalter 267 nicht geschaltet wird. Der schnelle Vorlauf kann beendet werden durch das Antippen der Tip-Spieltaste 264. Die Servostange 62 schiebt sich wieder zurück in die Spiellage, und der Kommandostift 257 erreicht wieder den Startbereich 270. Die Feder 260 schiebt die Bedienungsstange 33 nach links. Das Abspielen des Bandes erfolgt wieder in der Richtung, in der vorher abgespielt wurde.

Ist schneller Rücklauf gewünscht, dann wird auf die Schnellspul-Tiptaste 269 gedrückt. Die Steuerschaltung 224 gibt auf den Servomotor 221 ein Kommando, daß dieser die Servostange 62 nach links fahren läßt. Der Kommandostift 257 passiert die Kante 253a und ist damit in den Leitweg 253 weiter eingelaufen. In diesem Augenblick hat sich der Schalter 249 wieder geschlossen, was bedeutet, daß der Servomotor 221 nun in der Gegenrichtung umgesteuert wird mittels der Steuerschaltung 224. Der Kommandostift 257 ist nun gezwungen, in dem Leitweg 253 in dem bereits beschrittenen Richtungssinn weiterzulaufen, und zwar bis zu einer Kante 253b. Diese zwingt ihn, in die Kommandobahn 255 einzulaufen, wobei er den Mitnehmer 34a mitnimmt und nach und nach rechts verschiebt in die in Fig. 9B dargestellte rechte Stellung. Die einzelnen Bauteile in Fig. 1 haben sich nun in umgekehrte Richtung zum schnellen Rückspulen verstellt, und die Kante 36a, 36b hat wieder gegen die Stifte 74c und 74d gestoßen, womit die Kopfplatte wieder vom Band abgerückt ist. Der schnelle Rücklauf kann wieder beendet werden, indem die Spiel-Tiptaste 264 getippt wird. Dabei läuft der Kommandostift 257 bei rücklaufender Servostange 62 wieder in den Leitweg 253 ein bis in den Startbereich 270. Die Bedienungsstange 34 ist aufgrund der Vorspannung der Feder 261 dem Kommandostift 257 gefolgt und zurückgefahren in die Ausgangsstellung. Jetzt fängt wieder das Abspielen in der ursprünglichen Abspielrichtung an.

Beim Betätigen einer elektrischen Auswurf-Tiptaste 271 wird der Riegelmagnet 244 entregt, und der Riegelhebel 241 fällt ab. Die Kopfplatte 74 wird vom Band weggeschoben; der Schalter 267 schließt sich, und der Laufwerkmotor schaltet ab. Dadurch wird gesichert, daß der Kopf vom Band abgehoben hat und weder Band noch Kopf beschädigt werden können. Der Servomotor 221 fährt die Servostange 62 ganz nach links aus. Dabei fährt der Kommandostift 257 in die dritte Kommandobahn 256 ein. Weiterhin zieht die Feder 235 bei vorlaufender Servostange 62 den Auswerfer 232 gegen den Stift 237 und dreht den Auswerfer 232 entgegen dem Uhrzeigersinn. Damit wird die Kassette 228 nach Heben des Liftes 217 ausgeschoben, der Schalter 263 öffnet sich. Damit sichergestellt ist, daß der Kommandostift auch wirklich in die Kommandobahn 256 einläuft, d. h. daß die Servostange 62 auch wirklich weit genug nach links läuft, muß der Umkehrschalter 249 unwirksam gemacht werden. Dazu ist vorgesehen, daß die Steuerschaltung 224 den Umkehrschalter 249 nach dem Bedienen der Auswurf-Tiptaste 271 so schaltet, daß dieser den Umkehrbefehl nicht geben kann.

## Patentansprüche

1. Kommandomechanismus für das Laufwerk eines Magnetbandkassettengerätes mit zwei längsverschieblichen, nebeneinander angeordneten Bedienungsstangen (33, 34) zum Schalten zweier unterschiedlicher Betriebspositionen des Gerätes, dadurch gekennzeichnet, daß

an einer mittels eines Servomotors (221) in Längsrichtung hin und her verschieblichen Servostange (62) ein Kommandoglied (250) angreift,

an dem Kommandoglied (250) ein Kommandostift (257) angeordnet ist, der in einen mittels mindestens einer Richtungssperre (253b) nur in einem Richtungssinn durchfahrbar gemachten, in sich rundgeschlossenen Leitweg (253) eingreift,

von dem Leitweg (253) eine erste (254) und eine zweite Kommandobahn (255) abgehen, in die der Kommandostift (257) vom Leitweg (253) her einlaufen kann,

in die Kommandobahnen (254, 255) Mitnehmer (33a, 34a) der Bedienungsstangen (33, 34) eingreifen,

der Kommandostift (257) beim Einlaufen in die erste oder zweite Kommandobahn den jeweiligen Mitnehmer (33a, 34a) der zugeordneten Bedienungsstange (33, 34) die Stange verschiebend mitnimmt,

der Kommandostift (257) eine derartige Ausgangsposition (270) einnimmt, daß durch Hin- und Herverschiebung der Servostange (62) die zweite Kommandobahn (255) über die Richtungssperre (253b) im genannten Richtungssinn erreichbar ist, während die erste Kommandobahn (254) direkt in entgegengesetzter Richtung erreichbar ist.

2. Kommandomechanismus nach Anspruch 1, dadurch gekennzeichnet, daß das Kommandoglied (256) eine Verbindungsstange ist, an der der Kommandostift (257) am von der Servostange (62) abliegenden Ende gegenüber der Servostange (62) beweglich angreift.

3. Kommandomechanismus nach den Ansprüchen 1 und 2, dadurch gekennzeichnet, daß die Verbindungsstange (250) an einem Längsende (62a) der Servostange (62) angreift.

4. Kommandomechanismus nach einem oder mehreren der Ansprüche 1 bis 3, dadurch gekennzeichnet, daß die Kommandobahnen (255, 254) und der Leitweg (259) in einem gerätefesten Kommandoblock (251) vorgesehen sind.

5. Kommandomechanismus nach Anspruch 4, dadurch gekennzeichnet, daß am Kommandoblock (251) ein Niederhalter (258) vorgesehen ist, der den Kommandostift (257) in die Kommandobahnen (255, 254) und den Leitweg (253) drückt.

6. Kommandomechanismus nach Anspruch 1, dadurch gekennzeichnet, daß mit der Servostange (62) ein Umkehrschalter (249) zusammenwirkt, der gegenüber ihrem Längsverschiebungsweg derartig positioniert ist, daß die Drehrichtung des Motors (221) durch Schalterbetätigung erst dann umgekehrt wird, wenn der Kommandostift (257) in dem Leitweg (253) eine Stelle erreicht hat, aus der er den Leitweg (253) in der vorgegebenen Richtung durchlaufen muß.

7. Kommandomechanismus nach Anspruch 6, dadurch gekennzeichnet, daß sich das Laufwerk in einem Abspielzustand befindet, solange der Kommandostift im Startbereich (270) ist, und daß dann, wenn der Kommandostift (257) die erste bzw. zweite Kommandobahn (254, 255) durchlaufen hat, das Laufwerk in eine der zwei Schnellspulbetriebspositionen gebracht ist.

8. Kommandomechanismus nach Anspruch 6, dadurch gekennzeichnet, daß

von dem Leitweg (253) eine dritte Kommandobahn (256) abzweigt, die in Verlängerung des Servostangenverschiebungsweges liegt,

beim Einlaufen des Kommandostiftes (257) in die dritte Kommandobahn (256) mittels einer elektrischen Steuerschaltung (224) der Umkehrschalter (249) außer Funktion gesetzt wird.

## Revendications

1. Mécanisme de commande pour le système d'entraînement d'un appareil à cassette de bande magnétique comportant deux tiges de manoeuvre (33, 34) disposées côte à côte et longitudinalement mobiles pour la commutation de deux positions de fonctionnement différentes de l'appareil, caractérisé en ce que:

un organe de commande (250) est en prise avec une servotige (62) pouvant coulisser longitudinalement dans un sens et dans l'autre par l'intervention d'un servomoteur (221);

sur l'organe de commande (250) est prévu un doigt de commande (257) s'engageant·dans un chemin de guidage en boucle fermée (253) qui peut être parcouru dans un sens seulement à l'aide d'au moins un arrêt directionnel (253b);

du chemin de guidage (253) partent une première et une seconde glissière de commande (254 et 255) dans lesquelles le doigt de commande (257) peut pénétrer au sortir du trajet de guidage (253);

des organes entraîneurs (33a, 34a) des tiges de manoeuvre (33, 34) s'engagent dans les glissières de commande (254, 255);

le doigt de commande (257), à son entrée dans la première ou la seconde glissière de commande, entraîne à coulissement l'organe entraîneur (33a, 34a) correspondant de la tige de manoeuvre (33, 34) associée;

le doigt de commande (257) occupe une position de départ (270) telle que, par un coulissement de la servotige (62) dans un sens ou dans l'autre, la seconde glissière de commande (255) peut être atteinte par l'intermédiaire de l'arrêt directionnel (253b) dans ledit sens, tandis que la première glissière de commande (254) peut être atteinte directement dans le sens opposé.

2. Mécanisme de commande suivant la revendication 1, caractérisé en ce que l'organe de commande (256) est une tringle de liaison avec laquelle le doigt de commande (257) prévu sur l'extrémité opposée à la servotige (62) est engagé de façon mobile par rapport à la servotige (62).

3. Mécanisme de commande suivant les revendications 1 et 2, caractérisé en ce que la tringle de liaison (250) est engagée avec la servotige (62) à une extrémité longitudinale (62a) de celle-ci.

4. Mécanisme de commande suivant l'une quelconque des revendications 1 à 3, caractérisé en ce que les glissières de commande (255, 254) et le chemin de guidage (259) sont prévues dans un bloc de commande (251) fixé à l'appareil.

5. Mécanisme de commande suivant la revendication 4, caractérisé en ce qu'un presseur (258) est prévu sur le bloc de commande (251) et presse le doigt de commande (257) dans les glissières de commande (255, 254) et dans le chemin de guidage (253).

6. Mécanisme de commande suivant la revendication 1, caractérisé en ce que la servotige (62) coopère avec un commutateur inverseur (249) qui est positionné à l'égard de son trajet de coulissement longitudinal d'une manière telle que le sens de rotation du moteur (221) ne soit inversé par l'actionnement du commutateur que lorsque le doigt de commande (257) a atteint dans le chemin de guidage (253) une position à partir de laquelle il doit parcourir le chemin de guidage (253) dans le sens prédéfini.

7. Mécanisme de commande suivant la revendication 6, caractérisé en ce que le système d'entraînement se trouve dans un état de lecture tant que le doigt de commande se trouve dans sa zone de démarrage (270) et ensuite lorsque le doigt de commande (257) a parcouru la première et la seconde glissière de commande (254, 255), le système d'entraînement est amené dans une des deux positions de bobinage rapide.

8. Mécanisme de commande suivant la revendication 6, caractérisé en ce que:

une troisième glissière de commande (256) part du chemin de guidage (253) et est située dans le prolongement du trajet de coulissement de la servotige;

lors de l'entrée du doigt de commande (257) dans la troisième glissière de commande (256), le commutateur inverseur (249) est mis hors fonction à l'aide d'un circuit de commande électrique (224).

## Claims

1. A control mechanism for the deck of a magnetic-tape-cassette apparatus comprising two juxtaposed axially movable actuating rods (38, 34) for switching two different operating modes of the apparatus, characterized in that

a command member (250) acts on a servo rod (62) which is axially reciprocable by means of a servo motor (221),

the command member (250) carries a command pin (257) which engages a basically closed guideway (253) which is adapted be traversed in one direction only by means of at least one directional blocking device (253b),

the guideway (253) branches into a first (254) and a second (255) command track, which the command pin (257) can enter from the guideway (253),

drive portions (33a, 34a) of the actuating rods (33, 34) engage the command tracks (254, 255),

the command pin (257), as it enters the first or the second command track, drives the relevant drive portion (33a, 34a) of the corresponding actuating rod (33, 34) so as to move said rod,

the command pin (257) occupies such an initial position (270) that by a to-and-fro movement of the servo rod (62) that second command track (255) can be reached in the said direction via the directional blocking device (253b), whilst the first command track (254) can be reached directly in the opposite direction.

2. A control mechanism as claimed in Claim 1, characterized in that the command member (256) is a connecting rod on whose end which is remote from the servo rod (62) the command pin (257) acts so as to be movable relative to the servo rod (62).

3. A control mechanism as claimed in Claims 1 and 2, characterized in that the connecting rod (250) cooperates with an axial end portion (62a) of the servo rod (62).

4. A control mechanism as claimed in any one or any of the Claims 1 to 3, characterized in that the command tracks (255, 254) and the guideway (259) are formed in a command block (251) which is fixedly connected to the apparatus.

5. A control mechanism as claimed in Claim 4, characterized in that on the command block (251) there is arranged a hold-down means (258) which urges the command pin (257) into the command tracks (255, 254) and the guideway (253).

6. A control mechanism as claimed in Claim 1, characterized in that a reversing switch (249) cooperates with the servo rod (62) and is so arranged relative to the path of axial movement of said rod that the direction of rotation of the motor (221) is not reversed by actuation of the switch until the command pin (257) has reached such a location in the guideway (253) that it must travel through the guideway (253) in the predetermined direction.

7. A control mechanism as claimed in Claim 6, characterized in that as long as the command pin is in the starting portion (270) the tape deck is in a play mode and, when the command pin (257) has travelled through the first or the second command track (254, 255) the tape deck is set to one of the two fast-wind modes.

8. A control mechanism as claimed in Claim 6, characterized in that

the guideway (253) branches into a third command track (256) which is disposed in line with the path of movement of the servo rod,

the reversing switch (249) is rendered inoperative by means of an electrical control circuit (224) when the command pin (257) enters the third command track (256).

FIG.1

EP 0 138 268 B1

FIG.2A

FIG.2B

FIG.3

FIG.4

FIG.5

FIG.6

FIG.8

FIG.7

FIG.9A

FIG.9B